# EUROPEAN PATENT APPLICATION

(11) **EP 1 304 612 A2**
(43) Date of publication of application: **23.04.2003**
(21) Application number: 02257239.0
(22) Date of filing: 18.10.2002
(51) Int. Cl.: G06F 3/12

(54) **Printing method and system**

(30) Priority: 19.10.2001 SG 200106486
(71) Applicant: Hewlett-Packard Company, Palo Alto, CA 94304 (US)
(72) Inventor: Gomes, John Isaac Chandan, Singapore 449031 (SG); Tan, Chuan, #07-09 Singapore 588195 (SG)
(74) Representative: Jehan, Robert

(57) **Abstract**

A method which allows a user through a portable device (166) to print documents which are remotely stored is disclosed. The user designates a first document among the documents to be printed as an instruction in a portable device (166). Such an instruction is sent from the portable device (166) to a local printer (116) via a portable device communication port in the local printer (116), where it is further passed to a host computer (103) connected to the local printer (116) and capable of accessing the documents. According to the instruction, the host computer (03) retrieves the first document and subsequently prints out the retrieved first document on the local printer (116).

## Description

This invention relates to a printing method and system, for example for locally printing remotely-stored information using a portable device.

Conventionally, after editing and formatting a document by using a computer application, a user can print the document on a printer coupled to the computer. When the user is travelling, however, the user has to carry the edited document in a portable media or a laptop for accessing and processing it. If the user wants a printed version of the document, the user has to connect the laptop to a printer and quite often, to install a printer driver. These may not be desirable, especially for a user who travels often.

Recent years have seen a proliferation of portable electronic devices such as personal digital assistants (PDA's), cellular telephones, and/or other portable electronic device. Some such devices also include input/output ports to communicate with computer systems, printers, and other devices using either electrical cables or wireless communication interfaces such as Infrared data communication interfaces. Some devices even allow the user to store some information in them. The user of these portable devices, however, still cannot conveniently print out the information stored in the portable devices in that the user still needs to physically connect the devices with a printer.

Furthermore, a portable device may not include the proper applications to prepare for printing, or render, a particular document for a particular printer. Some portable devices like cellular telephones do not even allow applications like WinWord to be run on them.

US patent application 09/884,318, entitled "System and Method for Walk-up Printing" and assigned to Hewlett-Packard Company, discloses a printing system which allows a user to print documents stored in a portable device. In such a system, a non-rendered document, which is received in the local printer from a portable device via a portable device communication port, is relayed from the local printer to a host. The host identifies an application that is compatible with the non-rendered document and renders the non-rendered document with the application into a format compatible with the local printer, thereby creating a rendered document. Such a rendered document can then be sent to the local printer for printing.

Nevertheless, due to the compactness and the limitation of size, most portable devices are short of storage space. Inevitably, this shortage limits the capacity of information or data that a user can store or retrieve. Therefore, users of these portable devices are restrained from accessing documents.

The present invention seeks to provide an improved print system. According to an aspect of the present invention there is provided a method of printing as specified in Claim 1.
According to another aspect of the present invention there is provided a system for printing as specified in Claim 7.
According to an embodiment of the invention, disclosed is a method which allows a user through a portable device to print one of a plurality of documents which are remotely stored and which are accessible by a host computer connected to a printer. Firstly, the user designates a first document to be printed among the plurality of documents as an instruction in the portable device. Such an instruction is sent from the portable device to the printer via a portable device communication port of the printer and further passes to the host computer. According to the instruction the host computer retrieves the first document and subsequently prints the retrieved first document on the printer.

Advantageously, the host computer renders the retrieved first document into a format compatible with the printer, thereby creating a rendered document which is then sent to the printer for printing.

Preferably, information for identifying the plurality of documents is stored in the host computer in advance. This information is sent from the host computer to the portable device via the printer for designating the first document in the instruction.

Furthermore, the documents can be stored in a first computer which is connected to the host computer via a first network. The host computer retrieves the first document from the first computer by, for example, informing the first computer of at least part of the instruction from the portable device. In response, the first computer transmits the first document to the host computer accordingly.

According to another embodiment of the invention, disclosed is a system for printing one of a plurality of remotely-stored documents. The system includes a host computer and a printer connected thereto. The host computer has (1) a first interface for receiving an instruction which is composed through a portable device and which designates a first document to be printed among the plurality of documents and (2) means for retrieving the first document according to the instruction. The printer has (1) a portable device communication port for receiving the instruction from the portable device and (2) a second interface for communicating with the host computer and for passing the instruction to the first interface. The retrieved first document will be printed on the printer by the host computer.

Embodiments of the present invention are described below, by way of example only, with reference to the accompanying drawings, in which:
Figure 1 is a diagram of a computer system which includes a host computer and a printer and which can be used in an embodiment of the invention;
Figures 2 illustrates an embodiment of the invention using the system of Figure 1;
Figure 3 illustrates a process in implementing the invention of Figure 2; and
Figure 4 shows a dialog box which is shown on a portable device and through which a user can select a document to print according to the system of Figure 2.

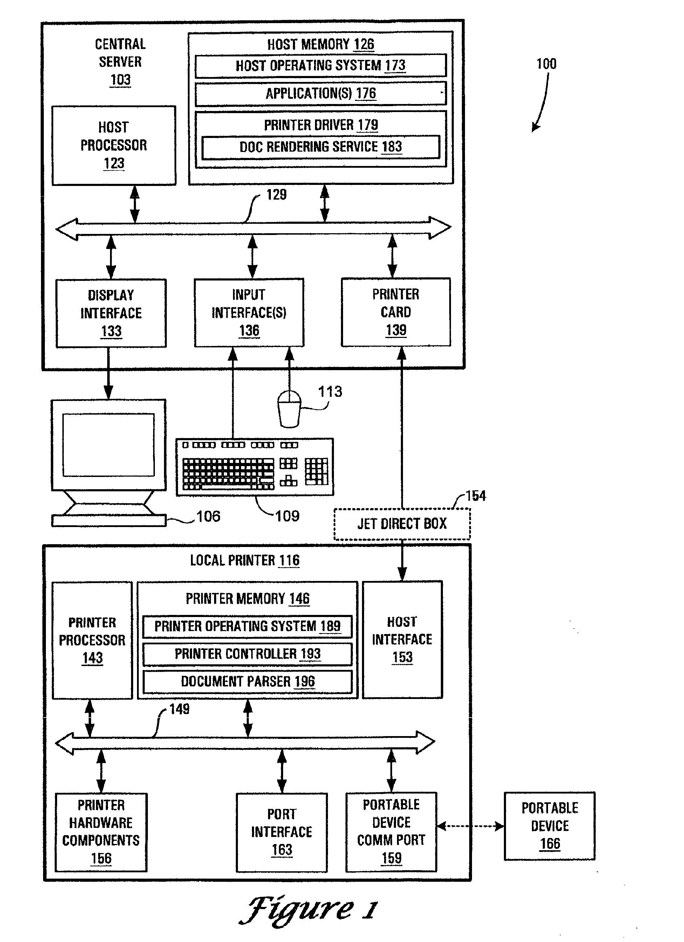

Figure 1 shows a computer system 100 that includes a host computer 103 with a plurality of peripheral devices, including, for example, a display device 106, a keyboard 109, a mouse 113 and a local printer 116.

The host computer 103 includes a processor circuit with a host processor 123 and a host memory 126, both of which are coupled to a computer local interface 129. The computer local interface 129 may be, for example, a data bus with an accompanying address/control bus as is generally known by those with ordinary ski!! in the art. The display device 106 is coupled to the computer local interface 129 by way of a display interface 133. Likewise the keyboard 109 and the mouse 113 are coupled to the computer local interface 129 through various input interfaces 136, and the local printer 116 is coupled to the computer local interface 129, for example, through a printer card 139 or other device of the like capacity. The display interface 133, input interfaces 136, and printer card 139 perform various processing functions and include buffer circuitry to facilitate the communication from the processor 123 to such peripheral devices via the computer local interface 129 as is generally known by those with ordinary skill in the art.

The local printer 116 also includes a processor circuit with a printer processor 143 and a printer memory 146, both of which are coupled to a printer local interface 149. The printer local interface 149 may be, for example, a data bus with an accompanying control/address bus as is generally known in this field. The local printer 116 also includes a host interface 153 that provides an interface between the printer local interface 149 and the printer card 139. In this respect, the printer card 139 and the host interface 153 each may include a port or a receptacle that will accommodate a data communications cable or other communications media therebetween.

The local printer 116 also includes various printer hardware components 156 such as, for example, motors, indicator lights, sensors, and other components that are driven and/or communicate with the processor circuit in the local printer 116 during the courses of general printer operation. A detailed description of the various printer hardware components 156 and their function is not provided herein since they are generally known and understood by those with ordinary skill in the art.

The local printer 116 also includes a portable device communication port 159 that is coupled to the printer local interface 149 through a port interface 163. In this respect, the port interface 163 may include, for example, an interface card or other such device that performs buffering and/or processing functions. These functions are performed in order to make information received and sent through the portable device communication port 159 available and accessible by the printer processor 143 by way of the printer local interface 149.

The portable device communication port 159 facilitates communication with a portable device 166 like a personal digital assistant (PDA). In this respect, the portable device communication port 159 may be an infrared communications port for wireless communication between the portable device 166 and the local printer 116. Alternatively, the portable device communication port 159 may include an electrical receptacle to receive a plug and a cable from the portable device 166 to facilitate electrical data communication. Such a receptacle may include, for example, a universal serial bus (USB) receptacle, a parallel port receptacle or another receptacle that the portable device 166 can plug into to facilitate data communications therebetween. Note that the portable device 166 also includes an appropriate communication port and/or other necessary capability to communicate with the local printer 116.

Within the host computer 103, stored in the host memory 126 and executed by the host processor 123 are several software components such as, for example, a host operating system 173, one or more applications 176, and a printer driver 179. With the printer driver 179 is a document rendering service 183. The document rendering service 183 can render a non-rendered document into a rendered document in a printer-ready-format for printing, which is disclosed in the US patent application 09/884,318 and herein incorporated by reference.

In a similar manner, the local printer 116 includes various software components stored in the printer memory 146 including the printer operating system 189, a document parser 196, and a printer controller 193. Specifically, the host operating system 173 and the printer operating system189 respectively control the allocation and usage of the host memory 126 and the printer memory 146, processing time and the peripheral devices as well as performing other functionality. In this manner, the host and printer operating systems 173 and 189 serve as the foundation on which applications operate.

The document parser 196, preferably a firmware embedded in the printer memory 146 and run by the printer operating system 189, is to parse incoming data flow from the portable device 166 via the portable device communication port 159 and extract necessary information from the incoming data flow.

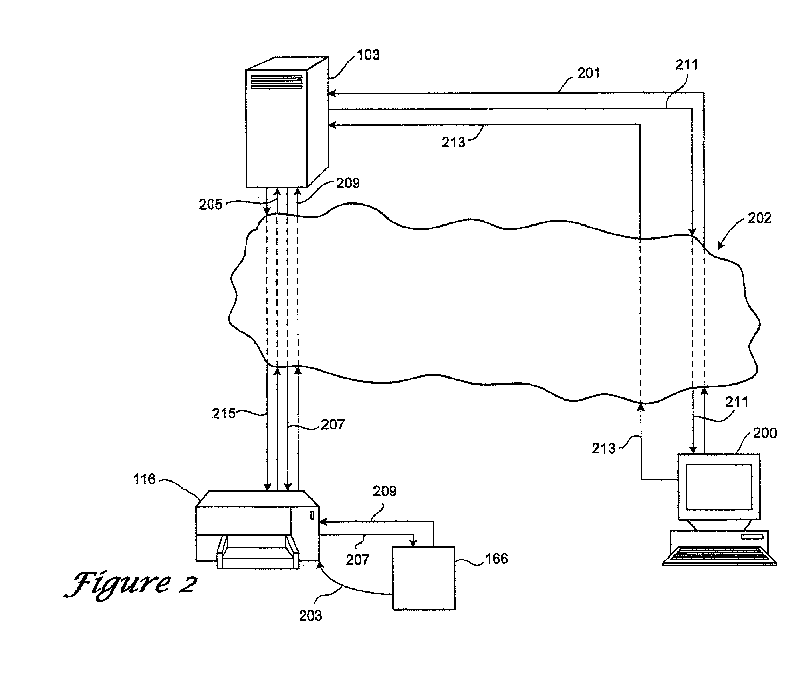

In the computer system 100 of Figure 1, the local printer 116 is connected to the host computer 103 directly. Alternatively, as shown in Figure 2, the local printer can be connected to the host computer 103 via a network, for example, the Internet 202. In that case, the host interface 153 is configured such that the local printer 116 can communicate with the host computer 103 through the Internet 202. For example, a card 154 such as the JetDirect box, a product of Hewlett-Packard Company of Palo Alto, California, can be coupled to the host interface 153 as a peripheral. The JetDirect box supports TCP/IP and allows an Internet Protocol (IP) address to be assigned to the local printer 116. Thereby, the local printer 116 can communicate with the host computer 103 through the Internet and can be identified by other devices when the local printer 116 is connected to the Internet. Similarly, in the embodiment of Figure 2, the printer card 139 is also configured to send data/information to the local printer 116 through the Internet. Connection and communication between a computer and a printer through the Internet are well known by those with ordinary skill in the art and will not be further discussed here.

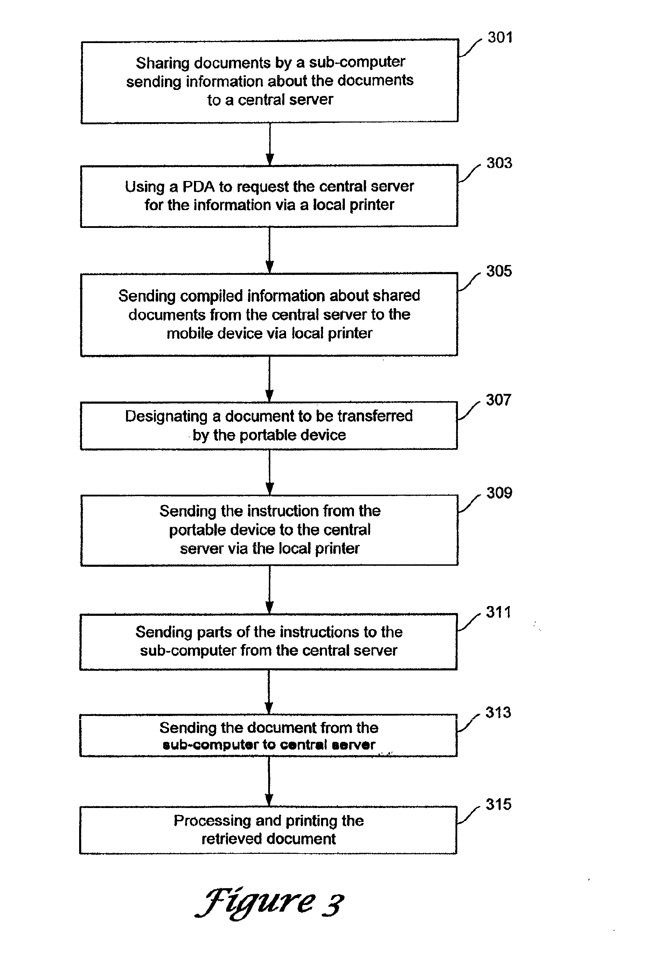

In an embodiment of the invention as shown in Figure 2 , a user can use a personal digital assistant (PDA) as a portable device 166 to print one of a plurality of documents stored in the user's personal computer 200 on a local printer 116. To enable the user to access the documents remotely, in Step 301 (see Figure 3) the documents have been shared out to a host computer 103 via the Internet 202 in advance; that is, filenames and locations of these documents have been sent to and stored in the host computer 103. While the user selects the files to be shared, a string of information is packed into an HTTP (Hyper Text Transfer Protocol) packet in the illustrative format shown below:
- HTTP header
- /MapleWML/CMServer/AddFile.asp
- Username (computer name for identifying the user's personal computer)
- User Password (for the purpose of security)
- Actual Path (Filename as in the user's personal computer 110)
- User Entered Name (e.g., a friendly name for the file)
- File Size
- HTTP Trailer.

The parameter "User Entered Name" identifies and is associated with the actual location of the individual file to be shared. By selecting such a user-entered name, the host computer 103 and the user's personal computer 200 are able to identify the file designated to be printed.

Such an HTTP packet then will be sent to the host computer 103 via the Internet 202 as shown by arrow 201 in Figure 2. In this embodiment, upon receiving it, the host computer 103 is activated by the parameter "/MapleWML/CMServer/AddFile.asp" to run a script. Thus the information following this parameter, i.e., the Username, User password, Actual Path, User Entered Name, and File size, will be added to a file database (not shown) of the host computer 103. The file database stores the filenames as well as the locations of the files shared out by each user.

Further, the personal computer 200 is publicly accessible, that is, in a public domain so that by using its Username and User Password, other computers or servers can access and retrieve documents from it. Furthermore, the personal computer 200 is running when the user initiates the print job.

When the user is away from the user's personal computer 200 and wants a printed copy of one of the documents, in Step 303, the user may use the portable device 166 to request the host computer 103 for information about those documents the user has shared out. In particular, the user approaches the local printer 116 and sends a request for such information to the printer 116 through the portable device communication port 159 as shown by arrow 203 in Figure 2. Such a request can be in the following illustrative format:
- HTTP Header
- Username
- User Password
- HTTP Trailer.

Upon receipt of such a request, the document parser 196 in the local printer 116 parses the request and extracts information about the Username as well as User Password from the HTTP request. Then, as shown by arrow 205, the printer processor 143 further passes the request to the host computer 103 through the Internet 202 by way of the host interface 153, the JetDirect Box 154 and the printer card 139. In addition, an appropriate communication protocol such as HTTP is used to communicate between the host computer 103 and the local printer 116.

After receiving the request, the host computer 103 packs a reply in the following illustrative HTTP format:
- HTTP Header
- <Filename>
- HTTP Trailer,
   where the parameter "<Filename>" includes the user-entered-names of all the files shared out by this particular user, that is, documents which are stored in the user's personal computer 200 and filenames of which have been sent to and stored in the host computer 103. The host computer 103 further sends its reply through its established connection in Step 305 to the local printer 116, which in turn passes it to the portable device 166 through the portable device communication port 159, as shown by arrow 207 in Figure 2.

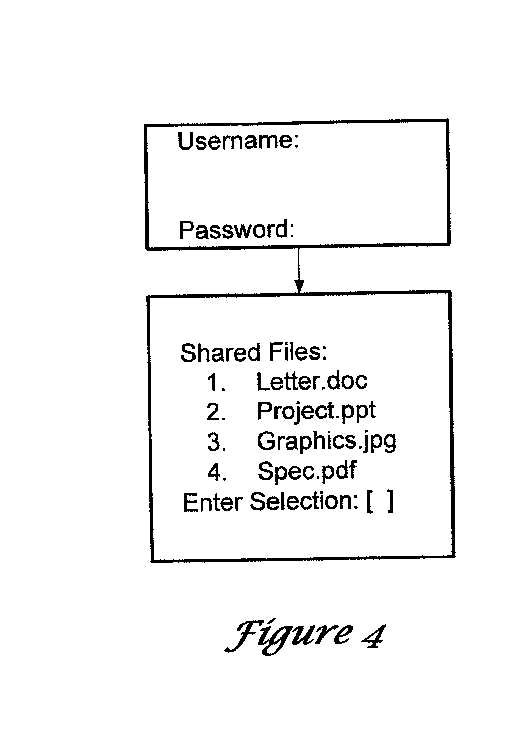

In Step 307, the user uses the portable device 166 to select a document to be printed from the user entered-names through a dialog box which is illustrated by Figure 4 and shown on the portable device 166. Specifically, such a selection may be incorporated into an instruction by the portable device 166 according to the following illustrative format:
- HTTP Header
- Username
- User Password
- A First Filename (user-entered-name)
- HTTP Trailer.

The parameter "A First Filename" specifies the filename of the document to be printed.

The portable device 166 then sends the instruction to the host computer 103 via the local printer 116 and the Internet 202 in Step 309 as shown by arrow 209. After receiving such an instruction, the host computer 103 requests that the document be uploaded from the user's personal computer 200 by sending the personal computer 200 the contents of the parameter "A First filename" in Step 311 (see arrow 211). The host computer 103 identifies and accesses the personal computer 200 via the parameters of "Username" and "User Password." In addition, the host computer 103 creates a parameter Job_ID for identifying the print job in the ensuing process.

The personal computer 200 accordingly retrieves the document identified by the parameter "A first Filename" from its storage unit (not shown). The retrieved file is subsequently packed into an HTTP packet, for example:
- HTTP Header
- /MapleWML/CMServer/FileUpload.asp
- Username
- User Password
- A First Filename
- Size of the file
- Job_ID
- File Content
- HTTP Trailer,
wherein the parameter "Job_ID" identifies the source of the job, especially, where the document to be printed comes from. The parameter "/MapleWML/CMServer/FileUpload.asp" will initiate the host computer 103 to retrieve the information contained therein, including the designated document which is contained in "File Content." Such an HTTP will then be sent from the personal computer 200 to the host computer 103 in Step 313 as shown by arrow 213.

In Step 315, the host computer 103 renders the document to a format compatible with the local printer 116, for example, a Page Descriptive Language (PDL) format. In particular, an appropriate application 176 corresponding to the file type of the retrieved document is executed with instructions that the application 176 print the document using the local printer 116. The application then proceeds to render and print the document. Once completed, the application 176 is closed. Selecting and executing an appropriate application to render the retrieved document into a format compatible with the local printer, thereby creating a rendered document, is described in US patent application 09/884,318.

Alternatives can be made to the above-described embodiments. For example, the documents can be forwarded to and stored in the host computer 103 in advance so that the host computer 103 will retrieve the documents directly from its storage unit (not shown). The local printer can also be connected to the host computer 103 directly as shown in Figure 1.

Additionally, other portable devices such as laptops can be used if they are able to communicate with the portable device communication port 159 in the local printer 116.

Furthermore, more than one printer or other appliances such as projectors and fax machines can be connected via the Internet or directly to the host computer 103. The user can select a particular appliance together with the selection of document to be retrieved. Accordingly, the host computer 103 identifies the selected appliance and applies the retrieved documents to such an appliance, rather than to the local printer 116. In such a case, the local printer acts more like an interface between the portable device and the host computer.

The disclosures in Singapore patent application No. SG200106486-4, from which this application claims priority, and in the abstract accompanying this application are incorporated herein by reference.

## Claims

1. A method of printing one of a plurality of documents which are remotely stored and which are accessible by a host computer connected to a printer, including the steps of:
designating a first document to be printed among the plurality of documents as an instruction in a portable device;
sending the instruction from the portable device to the printer via a portable device communication port of the printer;
passing the instruction from the printer to the host computer;
retrieving the first document by the host computer according to the instruction; and
printing the retrieved first document on the printer.

2. A method as in claim 1, including the steps of:
rendering in the host computer the retrieved first document into a format compatible with the printer to create a rendered first document; and
sending the rendered first document to the printer for printing.

3. A method as in claim 1 or 2, including the steps of:
storing information for identifying the plurality of documents in the host computer; and
sending the information from the host computer to the portable device via the printer for designating the first document in the instruction.

4. A method as claimed in claim 3, including the step of sending a request for the information from the portable device to the host computer via the printer.

5. A method as in any preceding claim, wherein the plurality of documents are stored in a first computer connected to the host computer via a first network, and including the step of retrieving the first document from the first computer by the host computer according to the instruction.

6. A method as in claim 5, including the steps of:
informing the first computer of at least part of the instruction by the host computer; and
transmitting the first document from the first computer to the host computer according to the part of the instruction.

7. A system for printing one of a plurality of remotely-stored documents, including:
a) a host computer including:
a first interface for receiving an instruction which is composed through a portable device and which designates a first document to be printed among the plurality of remotely-stored documents, and
means for retrieving the first document according to the instruction; and
b) a printer connected to the host computer, including:
a portable device communication port for receiving the instruction from the portable device, and
a second interface for communicating with the host computer and for passing the instruction to the first interface,
wherein the host computer prints the retrieved first document on the printer.

8. A system as in claim 7, wherein the host computer includes means for rendering the retrieved first document into a format compatible with the printer, thereby creating a rendered first document.

9. A system as in claim 7 or 8, wherein the host computer includes a memory unit for storing information for identifying the plurality of documents, and
means for sending the information from the host computer to the portable device via the printer for designating the first document in the printing instruction.

10. A system as in claim 7, 8 or 9, including a first computer connected to the host computer, wherein the first computer stores the plurality of documents, and wherein the host computer includes means for retrieving the first document from the first computer according to the instruction.

11. A system as in claim 10, wherein the host computer includes means for informing the first computer of at least part of the printing instruction, and wherein the first computer includes means for transmitting the first document from the first computer to the host computer according to the part of the printing instruction.
